# EUROPEAN PATENT SPECIFICATION

(11) **EP 0 531 496 B1**
(45) Date of publication and mention of the grant of the patent: **03.01.2001**
(21) Application number: 92907836.8
(22) Date of filing: 02.04.1992
(51) Int. Cl.: F16D 51/04, F16D 51/06, F16D 65/22, F16D 65/24

(54) **DRUM BRAKE ACTUATOR**
BETÄTIGUNGSVORRICHTUNG FÜR TROMMELBREMSE
ELEMENT DE COMMANDE DE FREIN A TAMBOUR

(30) Priority: 04.04.1991 AU 541791
(43) Date of publication of application: 17.03.1993
(60) Divisional application: 99203317.5
(73) Proprietor: BRAKE AND CLUTCH INDUSTRIES AUSTRALIA PTY. LTD., East Bentleigh, VIC 3165 (AU)
(72) Inventor: WANG, Nui, Croydon, VIC 3136 (AU)
(74) Representative: Beresford, Keith Denis Lewis
(86) International application number: AU9200139
(87) International publication number: WO9217711

(56) References cited:
- EP-A- 0 392 829
- AU-A- 7 048 874
- GB-A- 394 091
- GB-A- 487 802
- GB-A- 542 713
- GB-A- 727 627
- GB-A- 779 793
- GB-A- 925 593
- US-A- 1 696 729
- US-A- 1 739 782
- US-A- 2 125 266
- US-A- 2 404 054
- US-A- 3 199 639
- US-A- 4 374 554

## Description

This invention relates to an actuator for the brake shoe of a drum brake. The invention will be particularly described with reference to a drum brake of a leading-trailing configuration, having a substantially circular single shoe. It is to be understood however, that the invention is also applicable to drum brakes having different shoe configurations.

In the manufacture of brakes for motor vehicles and the like there is a need to have brake assemblies which utilise a low number of parts. Assemblies of this nature are advantageous for various reasons including a decreased chance of assembly failure, and a decrease in the time required to assemble the brake. There is also generally an associated decrease in cost of the assembly. Hydraulic brakes of this type have usually employed at least one piston/cylinder assembly which has two pistons movable in opposite directions within the cylinder, and the pistons are arranged to contact opposite ends of the brake shoe assembly. This arrangement requires separate seals for each of the two pistons thereby adding further to the number of components required for the total assembly. Single piston assemblies have been used in the past but have been considered not satisfactory because of the need for the piston/cylinder assembly to slide relative to the back plate on which the brake assembly is mounted. The sliding interfaces are a major source of problem due to the possibility of corrosion and seizure taking place.

Drum brake assemblies which include both service and park brake actuating mechanisms generally involve use of a park brake lever which is mechanically operable independently of a hydraulic service brake system. Prior arrangements of that kind have suffered from various problems. In one such prior arrangement, the park brake lever extends through the back plate for operation outside of the brake assembly in a plane which is generally parallel to the rotational axis of the brake drum. That arrangement, known as a cross-pull lever, has the disadvantage that the lever must pass through the back plate and must thus be separately sealed or booted at the location where it passes through the back plate to avoid the ingress of dirt into the brake assembly. The provision of the boot seal adds to the number of parts for the brake assembly. In another arrangement, known as an in-plane lever, the park brake lever operates in a plane generally transverse to the rotational axis of the drum. A problem with that arrangement is that the actuation points on the brake shoe for the park brake mechanism need to be separate from the actuation points for the service brake. That arrangement adds to the number of parts for the mechanism. Also, provision of separate actuation points is not practicable for some brake shoe configurations, particularly single piece shoe brakes having a channel shaped shoe body.

It is a requirement of modern brake assemblies that the mechanism is automatically adjustable to compensate for pad wear in use. It is a further requirement that the automatic adjustment mechanism is capable of operating as a result of service brake use, irrespective of whether the park brake is used. The mechanism should also be relatively simple and fail safe.

US-A-1696729 discloses a drum brake assembly wherein a substantially circular single shoe is actuated by a piston cylinder assembly between two ends thereof. The piston cylinder assembly is fixedly secured to the hub and a manual lever assembly is also provided which can cooperate with the piston cylinder assembly to act on the ends of the brake shoe to operate the brake mechanism. Since the piston cylinder assembly is attached to the hub, in order to allow movement of both ends of the brake shoe, the piston cylinder assembly has two pistons thereby adding to the number of components required.

US-A-2404054 discloses a drum brake assembly in which two substantially semicircular brake shoes are used with two piston cylinder assemblies between their ends. Both of the piston cylinder assemblies are fixed to a part of the vehicle and thus both of the piston cylinder assemblies have two pistons to move the ends of the brake shoes. A park brake mechanism is also provided which acts directly on one brake shoe and indirectly on the other brake shoe through the piston cylinder assembly. The use of two piston cylinder assemblies each having two pistons increases the number of components required and the use of a park brake mechanism operating through the piston cylinder assembly raises difficulties for a person attempting to simultaneously operate the service and brake park mechanism.

US-A-2125266 discloses a drum brake assembly comprising a backing plate, a brake shoe attached to the backing plate and having two opposed un-spaced ends, a first abutment at one end of the brake shoe and a second abutment at the other end of the brake shoe, a primary brake actuator comprising a piston cylinder assembly movably supported on the two ends of the brake shoe so that the piston cylinder assembly may move relative to the backing plate, and a secondary brake actuator comprising a member substantially fully contained in the brake assembly. The secondary brake actuator acts on one brake shoe directly and on the other brake shoe through the piston cylinder assembly thereby making it difficult for a person attempting to simultaneously operate the service and park brake mechanisms.

GB-A-779,793 describes a drum brake assembly having two brake shoes with one end of each brake shoe fixed to an anchorage on a back plate and a piston cylinder assembly being supported between the respective other ends of the brake shoes. A park brake mechanism is also described in which a park brake lever extends through the backing plate and acts directly on one of the brake shoes and acts indirectly via the piston cylinder assembly on the other of the brake shoes. The piston cylinder assembly and the park brake lever are fully floating and wholly supported by the two brake shoes. A C spring is required for each brake shoe to urge the brake shoes against platforms formed on the back plate.

It is an object of the present invention to provide an improved form of drum brake actuating mechanism which is of relatively simple form and involves the use of a relatively small number of components. It is a further object of the invention in a preferred form to provide a mechanism which is usable with a single piece brake shoe and which overcomes, or at least minimises, at least some of the aforementioned problems. A further object of the invention is to provide such a mechanism having a single piston hydraulic actuating mechanism. Yet another object of the invention in a preferred form is to provide such a mechanism having a simple yet effective automatic adjustment means.

According to the present invention, there is provided a drum brake assembly comprising a back plate, brake shoe means attached to said back plate and a brake actuating mechanism, said brake actuating mechanism comprising:
a piston and cylinder assembly having a single piston and being movably supported on first and second opposed portions of said brake shoe means, said piston and cylinder assembly being expansible by application of fluid pressure thereto and having first and second end parts arranged to act respectively on first and second opposed end portions of said brake shoe means for expanding said brake shoe means when fluid pressure is applied to said piston and cylinder assembly; and
a lever mounted for pivotal movement about an axis transverse to the longitudinal axis of said piston and cylinder assembly and, said lever having first and second portions arranged such that when said lever is pivoted:
said first portion of said lever acts on said first portion of said brake shoe means independently of both said end parts of said piston and cylinder assembly and independently of any fluid pressure in said piston and cylinder assembly; and
said second portion of said lever acts on said second end portion of said brake shoe means through said second end part of the piston and cylinder assembly independently of said first end part of the piston and cylinder assembly and independently of any fluid pressure in said piston and cylinder assembly,
the assembly being characterised in that said lever is mounted for pivotal movement about an axis substantially perpendicular to the back plate, and
the contact point between said first portion of said lever and said first portion of said brake shoe means, the contact point between said second end part of the piston and cylinder assembly and said brake shoe means and the contact point between said second portion of said lever and said piston and cylinder assembly are located in a plane substantially parallel to said back plate.

Embodiments of the invention are described in detail in the following passages of the specification which refer to the accompanying drawings. The drawings, however, are merely illustrative of how the invention might be put into effect, so that the specific form and arrangement of the various features as shown is not to be understood as limiting on the invention.

In the drawings:

Figure 1 is a partially sectioned end view of part of a brake assembly to which actuating mechanism according to one embodiment of the invention has been applied.

Figure 2 is a view of the upper portion of the assembly shown in Figure 1, and showing the piston-cylinder assembly in cross-section for convenience of illustration.

Figure 3 is a view taken along line III-III of Figure 1, but omitting parts for convenience of illustration.

Figure 4 is a view similar to Figure 3 but showing the cylinder body of the piston-cylinder assembly in cross-section, and in which certain parts are omitted for convenience of illustration.

Figure 5 is a cross-sectional view taken along line V-V of Figure 1.

Figures 6, 7 and 8 are diagrammatic representations indicating the manner of operation of the actuating mechanism of embodiments of the invention.

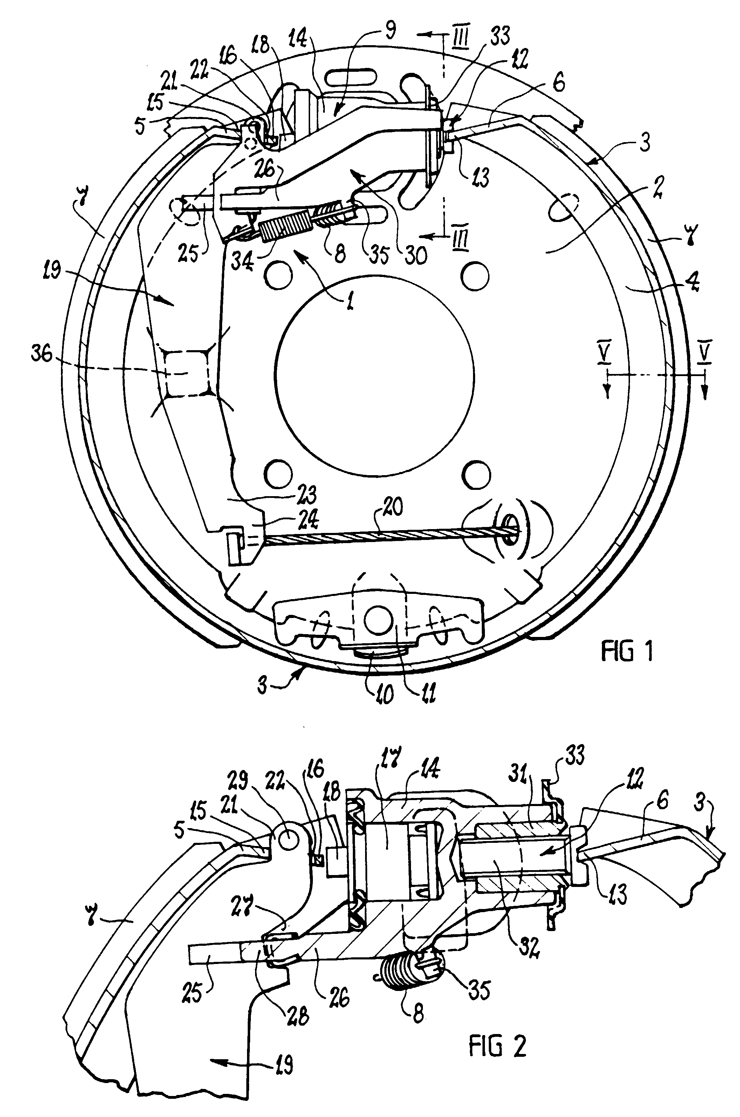

In the arrangement shown in Figure 1, the drum brake actuating mechanism 1 is mounted on a back plate 2 which is in turn fixed to a motor vehicle (not shown) so as to be fixed relative to the rotatable brake drum (not shown). The brake shoe 3 is preferably of substantially circular form as shown and is held to the back plate 2 at diametrically opposite positions. The body 4 of the brake shoe has opposed and spaced ends 5 and 6 between which the actuating mechanism 1 is located. That mechanism 1 is operable to urge the ends 5 and 6 apart so as to bring the friction material 7 on the radially outer surface of the shoe body 4 into contact with an opposed inner surface of the back drum. The shoe ends 5 and 6 may be held against the back plate 2 by any suitable means such as a bias spring 8 acting between the back plate 2 and a floatingly supported piston-cylinder assembly 9. The side of the brake shoe 3 diametrically opposite to the actuating mechanism 1 may be connected to an abutment block 10 which reacts the braking torque, and that side may be held against the backplate 2 by any suitable means such as a spring clip 11.

The actuating mechanism 1 includes the piston-cylinder assembly 9 which is arranged with its longitudinal axis extending between the ends 5 and 6 of the brake shoe 3. The mechanism 1 is preferably provided with an automatic adjuster which may include a screw threaded stud 12 arranged to contact an abutment 13 which forms the terminus of the shoe end 6 . The stud 12 is located at one end of the piston-cylinder assembly 9, and is connected to the cylinder body 14 of that assembly 9 as hereinafter described. The opposite end of the assembly 9 is arranged, in the arrangement shown, to coact indirectly with an abutment 15 which is provided at the shoe end 5. That indirect coaction is effected through an extension 16 of the shoe end 5.

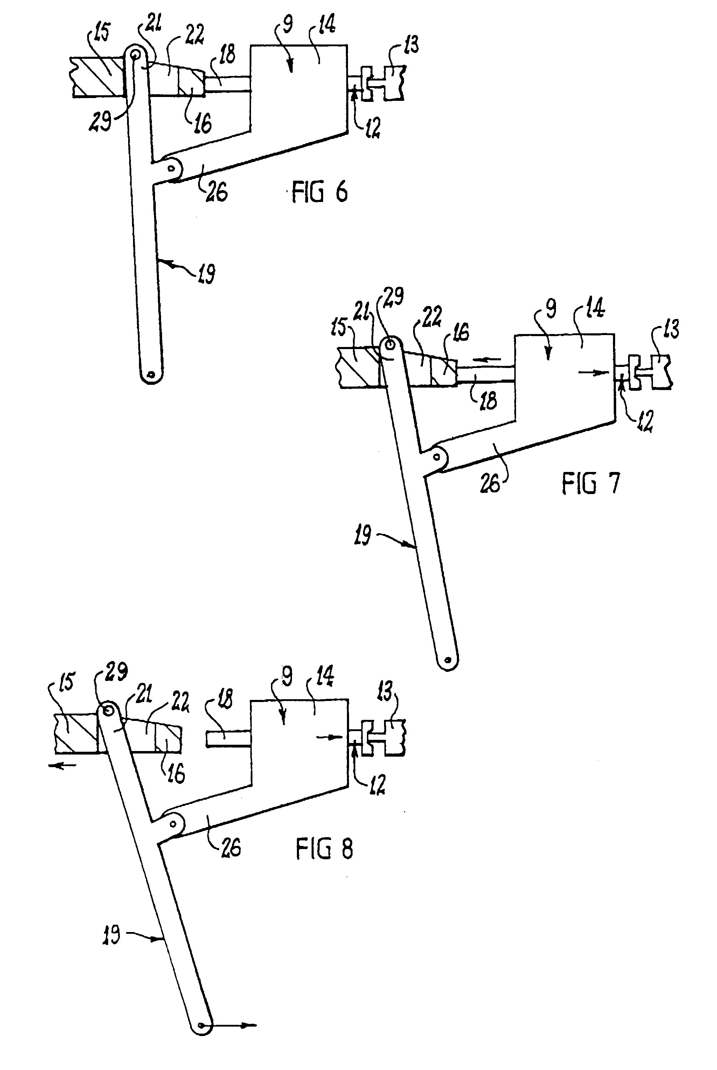

When the brake is operated in the service brake mode, fluid under pressure is urged into the cylinder body 14 so as to cause the piston 17 of the assembly 9 to move towards the extension 16. That movement causes a piston rod 18 to press against the extension 16 and thereby urge the ends 5 and 6 of the brake shoe 3 apart. That action is illustrated diagrammatically in Figure 7, which should be compared with Figure 6 to appreciate the increase in spacing between the shoe ends 5 and 6. The piston rod 18 and the adjustment stud 12 may be each provided with notched recesses within which the extension 16 and the abutment 13 respectively locate. The assembly 9 is thereby supported by the shoe ends 5 and 6 without contacting the backing plate 2.

The actuating mechanism 1 includes a secondary actuator member, which is formed by a lever 19 in the arrangement shown, and that lever is operable independently of the piston-cylinder assembly 9. The lever 19 is preferably operated by mechanical linkages including a pull cable 20, and will remain operative in the event of failure of the assembly 9 or the associated hydraulic system. In the arrangement shown, one end 21 of the lever 19 locates in a slot 22 formed in the shoe end extension 16. The opposite end 23 of the lever 19 is provided with a hook 24 around which the pull cable 20 locates for the purpose of operating the lever 19. The lever end 21 constitutes reaction means which coacts with the shoe abutment 15.

The lever 19 is pivotally connected to the assembly 9 at a location between the lever ends 21 and 23. In the arrangement shown, the connection is something in the form of a fulcrum connection. As best seen in Figure 2, the lever 19 is received between two laterally spaced arms 25 of a member 26 which is attached to or formed integral with the cylinder body 14. A recess 27 (Figure 2) formed in the edge of the lever 19 receives part of the member 26, and the base of that recess 27 engages a fulcrum edge 28 (Figure 2) of the member 26 so as to form the pivotal connection. It will be apparent that the lever 19 and the member 26 are kept in appropriate relationship by the configuration described. Furthermore, the arrangement is such that the lever 19 moves relative to the member 26 about a pivot axis which extends transverse to the longitudinal axis of the assembly 9 and generally parallel to the rotational axis of the associated brake drum.

When the brake is operated in the park brake mode, the lever 19 is caused to pivot relative to the member 26 as shown diagrammatically in Figure 8. As a consequence the reaction means 21 presses against the abutment 15 and the assembly 9 is moved in the opposite direction to press against the abutment 13. That opposite movement results from the reaction occurring at the fulcrum edge 28. The lever 19 and the assembly 9 therefore combine to form a composite structure through which brake applying force is reacted into the two shoe ends 5 and 6. In particular, the lever 19 acts directly on one end 5 and acts indirectly on the other end 6 through the assembly 9.

The lever end or reaction means 21 may be retained in the slot 22 by any suitable means. By way of example, that retention may be achieved or assisted by a half shear projection 29 (Figure 2) which extends laterally from a side of the lever 19. Displacement of the lever may be further hindered by locating part of a pawl 30 in the slot 22 so as to act as a "key".

As shown, the lever 19 preferably operates in the plane of the brake shoe expansion, i.e., transverse to the axis of rotation of the brake drum. Such an arrangement has various advantages. Firstly, the lever 19 does not need to pass through the back plate 2 as is required with cross-pull type park brake levers, and thus does not need to be separately booted as is required by cross-pull type levers. Secondly, an automatic adjustment facility of relatively simple operation can be adopted.

Several advantages result from utilising the cylinder body 14 as one of the components in the chain of components through which the brake is operated in the park brake mode. An important advantage is that the brake shoe abutments utilised during the service brake mode are also utilised during the park brake mode. Thus, only a single abutment is required at one end of the brake shoe, and a single abutment with an extension is provided at the other end. Thus, a relatively simple abutment arrangement is provided for the brake actuating mechanism.

As previously mentioned, the present invention is particularly suitable for use with a substantially circular type single piece brake shoe. That type of brake shoe has many advantages including a reduced number of components. It also has inherent resilience which facilitates retraction from a brake-on position to a brake-off position without the need for separate retraction springs. In a preferred form, the body 4 of the brake shoe is formed from a channel-shaped or U-shaped metal section. Provision of abutments on a U-shaped metal section is not always convenient, and generally requires additional welding or machining. In the preferred arrangement shown, that problem has been avoided by inward folding of the channel web or base at the ends 5 and 6 so as to form the abutments.

The mechanism 1 is preferably provided with an automatic adjuster, and that adjuster can be of any suitable form. One satisfactory automatic adjuster is shown in the drawings. That adjuster comprises a sleeve 31 (Figure 2) located in the cylinder body 14 so as to be relatively rotatable about the axis of that body, and having a threaded bore which is in cooperative engagement with the threaded shank 32 of the stud 12. A ratchet or toothed wheel 33 is fixed to the sleeve 31 so as to rotate with the sleeve 31. The adjuster also includes the pawl 30 which is pivotally connected to the upper end of the lever 19 and is also connected to the cylinder body 14. The pawl 30 is biased against the ratchet wheel 33 by means of a tension spring 34 (Figure 1).

When the actuating mechanism 1 is operated either in the service brake mode or the park brake mode, and there is excessive separation of the two shoe ends 5 and 6, the pawl 30 will pivot relative to the ratchet wheel 33, without losing engagement with the teeth around the periphery of the ratchet wheel 33. When the brake is released, the pawl 30 swings back towards its original disposition and in so doing causes the ratchet wheel 33 to rotate. The sleeve 31 is thereby rotated relative to the stud 12, and because of the threaded engagement between those two members the stud 12 is caused to move axially outwards of the sleeve 31. In the result, the effective length of the assembly 9 is increased and the brake released to brake engaged travel of the shoe 3 is thereby maintained substantially constant as the lining 7 wears.

It is relevant to the foregoing that the spring 34 acts between the pawl 30 and the cylinder body 14 in such a way as to urge the pawl 30 in a suitable direction of rotation. In that regard, the pawl 30 is able to swing to a limited extent about a pivot formed at or adjacent the lever end 21. As previously stated, part of the pawl 30 is located in the slot 22.

The upper end of the brake shoe 3 is held to the back plate 2 by means of the tension spring 8 which connects the cylinder body 14 to the back plate 2. In the arrangement shown, the tension spring 8 is attached to a lug 35 projecting laterally from the side of the cylinder body 14 adjacent the rotational axis of the brake drum. That attachment is such that there is a tendency for the cylinder body 14 to rotate about its axis in the direction of the force provided by the tension spring 8. The lever 19 bears against a raised platform 36 (Figure 1) formed on the back plate 2 and thereby limits the extent to which the cylinder body 14 can rotate. The spring 8 therefore serves to hold the upper end of the brake shoe 3 against the back plate 2 and also serves to hold the lever 19 in position against the back plate 2. That arrangement ensures that the lever 19 does not rattle or move about in an untoward manner during use of the vehicle.

The above described spring 8 is an example only. Other forms of bias springs located elsewhere performing similar functions are also suitable.

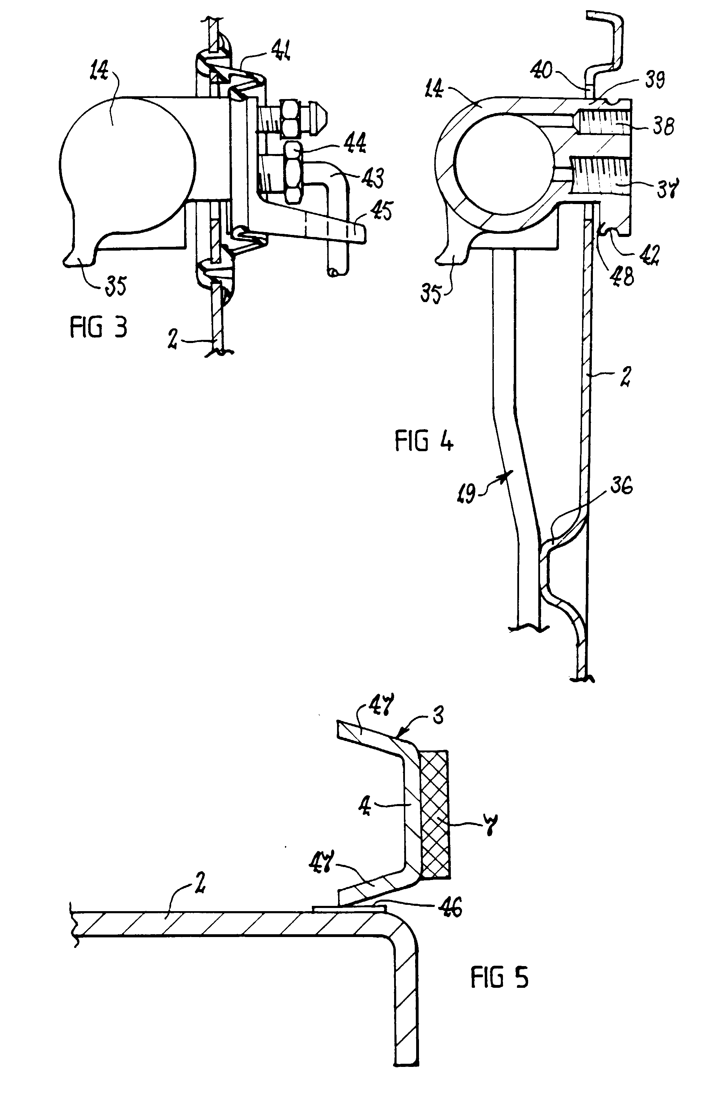

As best seen in Figure 4 of the drawings, the cylinder body 14 is provided with an inlet opening 37 through which fluid under pressure is supplied to the interior of the cylinder. An outlet opening 38 for a bleed outlet from the cylinder is also provided, and both inlet and outlet are located on a section 39 of the cylinder body 14 which projects through an opening 40 in the back plate 2. A rubber boot 41 (Figure 3) is provided around the cylinder body 14 and locates in a groove 42 (Figure 4) formed in the cylinder body 14. The boot 41 connects to the back plate 2 through a series of slots formed around the opening 40, and the boot 41 at least substantially prevents the ingress of dirt into the brake assembly at that location. The high pressure fluid to the cylinder is preferably supplied through a flexible hose or a metal pipe 43 (Figure 3) which is connected to the inlet by means of a union nut 44. In the latter case, it is preferred that the pipe 43 is received between a pair of locating fingers 45 (Figure 3) provided on the cylinder body 14 so as to support the supply pipe 43 and prevent it from twisting during tightening of the nut 44.

In the event that it is required to remove the brake drum from the vehicle, it may be necessary to first reduce the effective length of the piston-cylinder assembly 9 by screwing the stud 12 inwards. That may be achieved by removing the boot 41 from the back plate 2 and thereby making it possible to disengage the pawl 30 from the ratchet wheel 33 and thereby permitting the ratchet wheel 33 to be rotated in the reverse direction to decrease the effective length of the assembly 9.

It will be appreciated that because the hydraulic system utilises only a single piston the cylinder body 14 must be capable of moving relative to the back plate 2 during application of the brakes as well as throughout the life of the lining 7. The opening 40 through the back plate 2 must therefore be sufficiently large to accommodate such movement. However, it is preferred that the cylinder body 14 does not actually touch the back plate 2 directly. In the arrangement shown, that objective is achieved by having the brake shoe 3 slide on specially raised radially aligned platforms 46 (Figure 5) pressed out of the back plate 2. When the brake shoe 3 is formed of a U-shaped cross-sectional material, it is preferred that the flanges 47 (Figure 5) are slightly splayed so that the contact surface of the brake shoe 3 on the back plate platforms 46 is radially inwards from the outer edge of the back plate 2.

Since the cylinder body 14 does not contact the back plate 2, there will be relatively little possibility of the cylinder body 14 jamming against the back plate 2. In the past, such jamming has proved to be a problem in brakes of the type having sliding contact between the cylinder body and the back plate. In order to ensure that the upper side of the brake assembly does not inadvertently lift free of the back plate 2, it is preferred that the cylinder body 14 is provided with a lip 48 (Figure 4) which locates behind the edge of the opening 40 through the back plate 2. That lip 48 contacts the back surface of the back plate 2 in the event of the brake assembly lifting up from the back plate, but otherwise there will not be contact between the lip 48 and the back plate 2.

The present invention provides various advantages other than those described above. In particular, since the simplified abutment arrangement does not require special levers or additional abutment points, the space radially inwards of the brake shoe 3 is relatively free of brake components. The additional space thereby provided within the brake assembly can be utilised by, for example, apparatus required for an anti-lock braking system or the like. The reduced number of components will also decrease the overall cost of the assembly as well as simplifying assembly and decreasing assembly time.

Various modifications, additions or alterations may be made to the arrangement and construction of components as described herein without departing from the ambit of the invention as defined by the appended claims. Furthermore, relative terms such as "left hand" and "right hand" which are used in the specification, are not intended to restrict the invention to the particular arrangement shown. Such terms have been used simply to aid description of the invention and other configurations are clearly possible.

## Claims

1. A drum brake assembly comprising a back plate (2), brake shoe means (3) attached to said back plate (2) and a brake actuating mechanism (1), said brake actuating mechanism (1) comprising:
a piston and cylinder assembly (9) having a single piston (17) and being movably supported on first and second opposed portions (15, 13) of said brake shoe means (3), said piston and cylinder assembly (9) being expansible by application of fluid pressure thereto and having first and second end parts (18, 14) arranged to act respectively on first and second opposed end portions (15, 13) of said brake shoe means (3) for expanding said brake shoe means (3) when fluid pressure is applied to said piston and cylinder assembly (9); and
a lever (19) mounted for pivotal movement about an axis transverse to the longitudinal axis of said piston and cylinder assembly (9) and, said lever (19) having first and second portions (21, 27) arranged such that when said lever (19) is pivoted:
said first portion (21) of said lever (19) acts on said first portion (15) of said brake shoe means (3) independently of both said end parts (18, 14) of said piston and cylinder assembly (9) and independently of any fluid pressure in said piston and cylinder assembly (9); and
said second portion (27) of said lever (19) acts on said second end portion (13) of said brake shoe means (3) through said second end part (14) of the piston and cylinder assembly (9) independently of said first end part (18) of the piston and cylinder assembly (9) and independently of any fluid pressure in said piston and cylinder assembly (9),
the assembly being characterised in that said lever (19) is mounted for pivotal movement about an axis substantially perpendicular to the back plate (2), and
the contact point between said first portion (21) of said lever (19) and said first portion (15) of said brake shoe means (3), the contact point between said second end part of the piston and cylinder assembly (9) and said brake shoe means (3) and the contact point between said second portion (27) of said lever (19) and said piston and cylinder assembly (9) are located in a plane substantially parallel to said back plate (2).

2. A drum brake assembly according to claim 1, in which said first portion (21) of said lever (19) comprises one end thereof, the other end (23) thereof is connected to an actuator (20) for operating said lever (19), and said second portion (27) of said lever (19) is intermediate said ends thereof.

3. A drum brake assembly according to claim 1 or 2, in which said second end part (14) of said piston and cylinder assembly (9) comprises said cylinder (14), said second portion (27) of said lever (19) being connected to said cylinder (14) to act on said second portion (13) of said brake shoe means (3) through said cylinder (14).

4. A drum brake assembly according to any preceding claim, in which said second portion (27) of said lever (19) is arranged to pivot relative to said second end part of said piston and cylinder assembly (9).

5. A drum brake assembly according to any preceding claim, in which said first portion (21) of said lever (19) pivotally engages said first portion of said brake shoe means (3).

6. A drum brake assembly according to any preceding claim, in which said first portion (15) of said brake shoe means (3) has an extension at one end of the said brake shoe means (3), said first portion (21) of said lever (19) and said first end part (18) of said piston and cylinder assembly (9) being arranged to act on said extension (15) independently of each other.

7. A drum brake assembly (9) according to any preceding claim, in which said pivotal axis of said lever (19) is arranged so that said lever (19) pivots in the plane of rotation of a brake drum associated with said brake shoe means (3).

8. A drum brake assembly according to any preceding claim, including a spring (8) acting between the back plate (2) and the piston and cylinder assembly (9) for holding said end portions of said brake shoe means (3) against said back plate (2).

9. A drum brake assembly according to any preceding claim, in which said brake shoe means (3) is a substantially circular single shoe.

10. A drum brake assembly according to any preceding claim, wherein said piston and cylinder assembly (9) includes means (30,31, 32, 33) for automatically adjusting the effective length thereof to compensate for wear of the brake shoe means (3).

11. A drum brake assembly according to claim 10 as dependent upon claim 3, wherein said adjusting means comprises a spring biased pawl (30) connected between said lever (19) and said cylinder (14), an internally threaded member (31) rotatably mounted on said cylinder (14), a ratchet (33) fixed to the internally threaded member (31) and engaged by said pawl (32), and a threaded shank (32) of a stud (12) projecting axially from said cylinder (14) and attached thereto by threaded engagement of said shank (32) in said internally threaded member (31), said pawl (30) and said ratchet (33) being arranged to cause rotation of said internally threaded member (31) relative to the shank (32) upon excessive separation of said opposed portions (15, 13) of said brake shoe means (3) when the brake is actuated thereby to cause axial movement of said stud outwardly relative to said cylinder (14) to increase the effective length of the piston and cylinder assembly (9).

## Patentansprüche

1. Trommelbremsanordnung mit einer Grundplatte (2), einer an der Grundplatte 2 befestigten Bremsbackenvorrichtung (3) und einem Bremsbetätigungsmechanismus (1), wobei der Bremsbetätigungsmechanismus (1) aufweist:
eine Kolben- und Zylinderanordnung (9), welche einen einzigen Kolben (17) aufweist und auf ersten und zweiten, einander gegenüberliegenden Abschnitten (15, 13) der Bremsbackenvorrichtung (3) beweglich getragen ist, wobei die Kolben- und Zylinderanordnung (9) durch Anwendung von Flüssigkeitsdruck auf sie erweiterbar ist, und sie einen ersten und zweiten Endteil (18, 14) derart angeordnet aufweist, daß sie jeweils auf erste und zweite, einander gegenüberliegende Endabschnitte (15, 13) der Bremsbackenvorrichtung (3) einwirken, um die Bremsbackenvorrichtung (3) auszudehnen, wenn Flüssigkeitsdruck auf die Kolben- und Zylinderanordnung (9) ausgeübt wird; und
einen Hebel (19), welcher zur schwenkbaren Bewegung um eine quer zu der Längsachse der Kolben- und Zylinderanordnung (9) liegende Achse angeordnet ist, und wobei der Hebel (19) einen ersten und zweiten Abschnitt (21, 27) derart angeordnet aufweist, daß, wenn der Hebel (19) geschwenkt wird:
der erste Abschnitt (21) des Hebels (19) auf den ersten Abschnitt (15) der Bremsbackenvorrichtung (3) einwirkt, sowohl unabhängig von den Endteilen (18, 14) der Kolben- und Zylinderanordnung (9) als auch unabhängig von irgendeinem Flüssigkeitsdruck in der Kolben- und Zylinderanordnung (9); und
der zweite Abschnitt (27) des Hebels (19) auf den zweiten Endabschnitt (13) der Bremsbackenvorrichtung (3) durch den zweiten Endteil (14) der Kolben- und Zylinderanordnung (9) einwirkt, unabhängig von dem ersten Endteil (18) der Kolben- und Zylinderanordnung (9) und unabhängig von irgendeinem Flüssigkeitsdruck in der Kolben- und Zylinderanordnung (9),
wobei die Anordnung dadurch gekennzeichnet ist, daß der Hebel (19) zur schwenkbaren Bewegung um eine im wesentlichen senkrecht zu der Grundplatte (2) liegende Achse angeordnet ist, und
der Kontaktpunkt zwischen dem ersten Abschnitt (21) des Hebels (19) und dem ersten Abschnitt (15) der Bremsbackenvorrichtung (3), der Kontaktpunkt zwischen dem zweiten Endteil der Kolben- und Zylinderanordnung (9) und der Bremsbackenvorrichtung (3) und der Kontaktpunkt zwischen dem zweiten Abschnitt (27) des Hebels (19) und der Kolben- und Zylinderanordnung (9) in einer Ebene angeordnet sind, welche parallel zu der Grundplatte (2) liegt.

2. Trommelbremsanordnung gemäß Anspruch 1, bei welcher der erste Abschnitt (21) des Hebels (19) eines seiner Enden aufweist, wobei das andere seiner Enden mit einer Betätigungsvorrichtung (20) zur Betätigung des Hebels (19) verbunden ist, und wobei der zweite Abschnitt (27) des Hebels (19) zwischen seinen Enden angeordnet ist.

3. Trommelbremsanordnung gemäß Anspruch 1 oder 2, bei welcher der zweite Endteil (14) der Kolben- und Zylinderanordnung (9) den Zylinder (14) aufweist, wobei der zweite Abschnitt (27) des Hebels (19) mit dem Zylinder (14) verbunden ist, um auf den zweiten Abschnitt (13) der Bremsbackenvorrichtung (3) durch den Zylinder (14) einzuwirken.

4. Trommelbremsanordnung gemäß irgendeinem vorherigen Anspruch, bei welcher der zweite Abschnitt (27) des Hebels (19) derart angeordnet ist, daß er bezüglich des zweiten Endteils der Kolben- und Zylinderanordnung (9) schwenkt.

5. Trommelbremsanordnung gemäß irgendeinem vorherigen Anspruch, bei welcher der erste Abschnitt (21) des Hebels (19) schwenkbar in den ersten Abschnitt der Bremsbackenvorrichtung (3) eingreift.

6. Trommelbremsanordnung gemäß irgendeinem vorherigen Anspruch, bei welcher der erste Abschnitt (15) der Bremsbackenvorrichtung (3) eine Verlängerung an einem Ende der Bremsbackenvorrichtung (3) aufweist, wobei der erste Abschnitt (21) des Hebels (19) und der erste Endteil (18) der Kolben- und Zylinderanordnung (9) derart angeordnet sind, daß sie unabhängig voneinander auf die Verlängerung (15) einwirken.

7. Trommelbremsanordnung (9) gemäß irgendeinem vorherigen Anspruch, bei welcher die Schwenkachse des Hebels (19) derart angeordnet ist, daß der Hebel (19) in der Drehebene einer mit der Bremsbackenvorrichtung (3) verbundenen Trommelbremse schwenkt.

8. Trommelbremsanordnung gemäß irgendeinem vorherigen Anspruch, welche eine Feder (8) umfaßt, die zwischen der Grundplatte (2) und der Kolben- und Zylinderanordnung (9) wirkt, um die Endabschnitte der Bremsbackenvorrichtung (3) gegen die Grundplatte (2) zu halten.

9. Trommelbremsanordnung gemäß irgendeinem vorherigen Anspruch, bei welcher die Bremsbackenvorrichtung (3) eine im wesentlichen kreisförmige einzelne Bremsbacke ist.

10. Trommelbremsanordnung gemäß irgendeinem vorherigen Anspruch, bei welcher die Kolben- und Zylinderanordnung (9) Vorrichtungen (30, 31, 32, 33) aufweist, um ihre effektive Länge automatisch einzustellen, um den Verschleiß der Bremsbackenvorrichtung (3) auszugleichen.

11. Trommelbremsanordnung gemäß Anspruch 10 und abhängig von Anspruch 3, bei welcher die Einstellvorrichtung eine mit einer Feder vorgespannte Sperrklinke (30), welche zwischen dem Hebel (19) und dem Zylinder (14) angeordnet ist, ein nach innen gewindetes Element (31), welches drehbar auf dem Zylinder (14) angeordnet ist, ein an dem nach innen gewindeten Element (31) befestigtes und von der Sperrklinke (30) eingegriffenes Sperrad (33) und einen gewindeten Schaft (32) eines Ansatzes (12) aufweist, welcher axial von dem Zylinder (14) vorspringt und an diesem durch den gewindeten Eingriff des Schaftes (32) in das nach innen gewindete Element (31) befestigt ist, wobei die Sperrklinke (30) und das Sperrad (33) derart angeordnet sind, daß sie eine Drehung des nach innen gewindeten Elementes (31) bezüglich des Schaftes (32) bei übermäßiger Beabstandung der gegenüberligenden Abschnitte (15, 13) der Bremsbackenvorrichtung (3), wenn die Bremse betätigt ist, bewirken, wodurch sie die axiale Bewegung des Ansatzes nach außen bezüglich des Zylinders (14) bewirken, um die effektive Länge der Kolben- und Zylinderanordnung (9) zu vergrößern.

## Revendications

1. Ensemble de frein à tambour comportant une plaque arrière (2), un moyen à segment de frein (3) relié à ladite plaque arrière (2) et un mécanisme (1) d'actionnement de frein, ledit mécanisme (1) d'actionnement de frein comportant :
un ensemble (9) à piston et cylindre ayant un seul piston (17) et supporté de façon mobile sur des première et seconde portions opposées (15, 13) dudit moyen à segment de frein (3), ledit ensemble (9) à piston et cylindre pouvant être expansé par l'application d'une pression de fluide à cet ensemble et ayant des première et seconde parties extrêmes (18, 14) agencées de façon à agir respectivement sur des première et seconde portions extrêmes opposées (15, 13) dudit moyen à segment de frein (3) pour expanser ledit moyen à segment de frein (3) lorsqu'une pression de fluide est appliquée audit ensemble (9) à piston et cylindre ; et
un levier (19) monté de façon à exécuter un mouvement de pivotement autour d'un axe transversal à l'axe longitudinal dudit ensemble (9) à piston et cylindre et ledit levier (19) ayant des première et seconde portions (21, 27) agencées de manière que, lorsque ledit levier (19) est amené à pivoter :
ladite première portion (21) dudit levier (19) agisse sur ladite première portion (15) dudit moyen à segment de frein (3) indépendamment desdites deux parties extrêmes (18, 14) dudit ensemble (9) à piston et cylindre et indépendamment de toute pression de fluide régnant dans ledit ensemble (9) à piston et cylindre ; et
ladite seconde portion (27) dudit levier (19) agisse sur ladite seconde portion extrême (13) dudit moyen à segment de frein (3) par l'intermédiaire de ladite seconde partie extrême (14) dudit ensemble (9) à piston et cylindre indépendamment de ladite première partie extrême (18) de l'ensemble (9) à piston et cylindre et indépendamment de toute pression de fluide régnant dans ledit ensemble (9) à piston et cylindre,
l'ensemble étant caractérisé en ce que ledit levier (19) est monté de façon à effectuer un mouvement de pivotement autour d'un axe sensiblement perpendiculaire à la plaque arrière (2), et
le point de contact entre ladite première portion (21) dudit levier (19) et ladite première portion (15) dudit moyen à segment de frein (3), le point de contact entre ladite seconde partie extrême dudit ensemble (9) à piston et cylindre et ledit moyen à segment de frein (3) et le point de contact entre ladite seconde portion (27) dudit levier (19) et ledit ensemble (9) à piston et cylindre sont situés dans un plan sensiblement parallèle à ladite plaque arrière (2).

2. Ensemble de frein à tambour selon la revendication 1, dans lequel ladite première portion (21) dudit levier (19) comprend une extrémité de celui-ci, son autre extrémité (23) étant reliée à un actionneur (20) pour manoeuvrer ledit levier (19), et ladite seconde portion (27) dudit levier (19) est entre lesdites extrémités de celui-ci.

3. Ensemble de frein à tambour selon la revendication 1 ou 2, dans lequel ladite seconde partie extrême (14) dudit ensemble (9) à piston et cylindre comprend ledit cylindre (14), ladite seconde portion (27) dudit levier (19) étant reliée audit cylindre (14) afin d'agir sur ladite seconde portion (13) dudit moyen à segment de frein (3) par l'intermédiaire dudit cylindre (14).

4. Ensemble de frein à tambour selon l'une quelconque des revendications précédentes, dans lequel ladite seconde portion (27) dudit levier (19) est agencée de façon à pivoter par rapport à ladite seconde partie extrême dudit ensemble (9) à piston et cylindre.

5. Ensemble de frein à tambour selon l'une quelconque des revendications précédentes, dans lequel ladite première portion (21) dudit levier (19) engage de façon pivotante ladite première portion dudit moyen à segment de frein (3).

6. Ensemble de frein à tambour selon l'une quelconque des revendications précédentes, dans lequel ladite première portion (15) dudit moyen à segment de frein (3) comporte un prolongement à une extrémité dudit moyen à segment de frein (3), ladite première portion (21) dudit levier (19) et ladite première partie extrême (18) dudit ensemble (9) à piston et cylindre étant agencées de façon à agir sur ledit prolongement (15) indépendamment l'une de l'autre.

7. Ensemble de frein à tambour (9) selon l'une quelconque des revendications précédentes, dans lequel ledit axe de pivotement dudit levier (19) est agencé de façon que ledit levier (19) pivote dans le plan de rotation d'un tambour de frein associé audit moyen à segment de frein (3).

8. Ensemble de frein à tambour selon l'une quelconque des revendications précédentes, comprenant un ressort (8) agissant entre la plaque arrière (2) et l'ensemble (9) à piston et cylindre pour maintenir lesdites portions extrêmes dudit moyen à segment de frein (3) contre ladite plaque arrière (2).

9. Ensemble de frein à tambour selon l'une quelconque des revendications précédentes, dans lequel ledit moyen à segment de frein (3) est un segment unique sensiblement circulaire.

10. Ensemble de frein à tambour selon l'une quelconque des revendications précédentes, dans lequel ledit ensemble (9) à piston et cylindre comprend des moyens (30, 31, 32, 33) destinés à régler automatiquement sa longueur utile pour rattraper l'usure du moyen à segment de frein (3).

11. Ensemble de frein à tambour selon la revendication 10 lorsqu'elle dépend de la revendication 3, dans lequel lesdits moyens de réglage comprennent un cliquet (30) rappelé par ressort monté entre ledit levier (19) et ledit cylindre (14), un élément (31) fileté intérieurement monté de façon à pouvoir tourner sur ledit cylindre (14), un rochet (33) fixé à l'élément fileté intérieurement (31) et engagé par ledit cliquet (30), et une tige filetée (32) d'un goujon (12) faisant saillie axialement dudit cylindre (14) et relié à celui-ci par prise vissée de ladite tige (32) dans ledit élément fileté intérieurement (31), ledit cliquet (30) et ledit rochet (33) étant agencés de façon à faire tourner ledit élément fileté intérieurement (31) par rapport à la tige (32) lors d'une séparation excessive desdites portions opposées (15, 13) dudit moyen à segment de frein (3) lorsque le frein est actionné de façon à provoquer un mouvement axial dudit goujon vers l'extérieur par rapport audit cylindre (14) pour augmenter la longueur utile de l'ensemble (9) à piston et cylindre.
